# EUROPÄISCHE PATENTANMELDUNG

(11) **EP 2 738 721 A1**
(43) Veröffentlichungstag der Anmeldung: **04.06.2014**
(21) Anmeldenummer: 12075133.4
(22) Anmeldetag: 28.11.2012
(51) Int. Cl.: G06Q 10/10

(54) **Verfahren und System zur Präsentation bei kollaborativer Zusammenarbeit**

(71) Anmelder: Deutsche Telekom AG, 53113 Bonn (DE); Technische Universität Berlin, 10623 Berlin (DE)
(72) Erfinder: Kraft, Andreas, 14129 Berlin (DE); Manecke, Alexander, 12163 Berlin (DE); Helmut, Vivien, 12309 Berlin (DE); Gerneth, Marlene, 16341 Panketal (DE); Wolter, Alexandra-Sophie, 16547 Birkenwerder (DE); Schulz-Ehrcke, Rainer, 10707 Berlin (DE); Jenschar, Thomas, 13503 Berlin (DE); Merrall, Simon, 10178 Berlin (DE)
(74) Vertreter: Brandt & Nern Patentanwälte

(57) **Zusammenfassung**

Zur Anpassung von während einer Präsentation (in einem Netzwerk) dargebotenen medialen Inhalten an die empfängerseitige Leistungsfähigkeit, also die Leistungsfähigkeit von Mensch und/oder Technik auf der Seite mindestens eines der Präsentation folgenden Teilnehmers (8) wird vorgeschlagen die die medialen Inhalte abbildenden Daten von den übrigen Präsentationsdaten, wie Konfigurations-, Steuer- und/oder Kontrolldaten und/oder Kommandos zu trennen und diese mittels mindestens einer entsprechend leistungsfähigen netzseitigen Einrichtung (5) gesondert aufzubereiten, nämlich zu skalieren. Die skalierten Daten werden dann vor der Weiterleitung an das die medialen Inhalte für den mindestens einen, der Präsentation folgenden Teilnehmer (8) ausgebende Endgerät (2) zeitlich synchronisiert wieder mit den übrigen Präsentationsdaten zusammengeführt. Durch die Verlagerung der eigentlichen Skalierungsarbeit auf eine zentrale Ebene, nämlich auf eine oder mehrere netzseitige Einrichtungen (5) können Nutzer unterschiedlichster Endgeräte (2) mit insbesondere unterschiedlicher Leistungsfähigkeit im Rahmen der kollaborativen Zusammenarbeit an Präsentationen teilnehmen, ohne dafür besondere Vorkehrungen oder Anpassungen zur Skalierung an den von ihnen verwendeten Endgeräten (2) vornehmen zu müssen.

## Beschreibung

Die Erfindung betrifft eine Lösung zur Durchführung einer Präsentation im Rahmen der kollaborativen Zusammenarbeit von Nutzern computerbasierter beziehungsweise mit einer Verarbeitungseinheit für Software ausgestatter Endgeräte. Sie bezieht sich auf ein Verfahren und System zur Durchführung einer Präsentationen, bei deren Ablauf sich mindestens eine der Präsentation folgende Person an einem anderen Ort, das heißt zumindest in einem anderen Raum aufhält, als die die Präsentation darbietende Person. In diesem Zusammenhang soll dem nachfolgend und in den Patentansprüchen verwendeten Begriff der "virtuellen Präsentation" ein Verständnis zugrunde gelegt werden, wonach die eigentliche Präsentation zwar selbstverständlich real ist, sich deren virtueller Charakter aber darauf bezieht, dass sich nicht alle Teilnehmer der Präsentation bei deren Durchführung am selben Ort aufhalten. Dabei bedienen sich die Teilnehmer der Präsentation entsprechender, auf den von ihnen verwendeten Endgeräten ablaufender Programmanwendungen für die kollaborative Zusammenarbeit, das heißt arbeitsgruppenorientierter Programmanwendungen (Groupware-Anwendungen) oder universeller beziehungsweise betriebssystem- und geräteunabhängiger, beispielsweise als Plugin ausgebildeter Browseranwendungen. Die vorgeschlagene Lösung dient nun der Optimierung einer solchen kollaborativen Zusammenarbeit im Hinblick auf die Übertragung und die Ausgabe bei einer Präsentation vom Präsentierenden verwendeter beziehungsweise dargebotener medialer Inhalte. Gegenstand der Erfindung sind ein entsprechendes Verfahren und ein zur Durchführung dieses Verfahrens ausgebildetes System.

Insbesondere im Zusammenhang mit der Entwicklung komplexer Erzeugnisse und der Bereitstellung umfangreicher Dienstleistungsangebote besteht bei den daran beteiligten Akteuren ein erhöhter Bedarf an Informationsaustausch. Nicht selten ist es dabei auch erforderlich, Informationen und Arbeitsergebnisse zwischen an unterschiedlichen Standorten agierenden Personen auszutauschen und zu teilen. Ein bewehrtes und inzwischen häufig eingesetztes Instrument stellen in diesem Zusammenhang beispielsweise Telefonkonferenzen dar. Bei reinen Telefonkonferenzen ist es jedoch nur bedingt möglich, zum Beispiel Arbeits- oder Entwicklungsergebnisse oder sonstige Informationen umfassend zu präsentieren. Insoweit besteht häufig auch ein Bedarf an entsprechenden visuellen und sonstigen medialen Informationen. Eine Möglichkeit der standort-übergreifenden Präsentation von visuellen Informationen stellt die Durchführung von Videokonferenzen dar.

Darüber hinaus ist jedoch in jüngerer Zeit eine starke Zunahme der softwarebasierten Zusammenarbeit von Personen zu verzeichnen, welche Programmanwendungen gemeinsam nutzen ohne sich hierbei zwingend am gleichen Ort (im gleichen Raum) aufhalten zu müssen. Man spricht in diesem Zusammenhang von kollaborativer Zusammenarbeit. Ein Beispiel hierfür bilden als Groupware bezeichnete Programmanwendungen, bei welchen es sich um spezielle Programmanwendungen handelt, die für eine gegebenenfalls über ein Netzwerk erfolgende Zusammenarbeit von Mitgliedern einer Arbeitsgruppe konzipiert sind und es diesen erlauben, gemeinsam an Projekten zu arbeiten, welche softwarebasiert sind oder sich in Software abbilden lassen. Für die kollaborative Zusammenarbeit in einem Netzwerk finden ferner zunehmend universelle, das heißt betriebssystem- und geräteunabhängige, als Plugin ausgebildete Browseranwendungen Verwendung. Neben der Übertragung von Bilddaten bieten entsprechende Programmanwendungen für die kollaborative Zusammenarbeit auch die Möglichkeit, auf Funktionen des Betriebssystems eines die Informationen jeweils empfangenden Endgeräts zuzugreifen. Hierdurch ist es dem Präsentator beispielsweise möglich, die Steuerung der Maus und/oder des Cursors auf dem empfangenden Endgerät zu übernehmen.

Nach dem Stand der Technik erfolgt dabei die Übertragung der im Rahmen einer solchen Präsentation vom Präsentierenden beziehungsweise Präsentator dargebotenen Informationen, indem ein Abbild des graphischen Nutzerinterfaces (GUI), das heißt der auf einem Endgerät von einer präsentierenden Person sichtbaren grafischen Informationen komprimiert und pixelbasiert von dem Präsentator, als dem Sender, auf das Endgerät eines oder mehrerer der Präsentation folgender Empfänger übertragen wird. Da die Übertragung visueller Informationen im Allgemeinen hohe Datenübertragungsbandbreiten erfordert, wofür entsprechend breitbandige, nicht immer zur Verfügung stehende Daten-übertragungsleitungen benötigt werden, behilft man sich dadurch, dass zur Entlastung der Übertragungsstrecke an die Endgeräte der Präsentationsempfänger erst ein initiales (komprimiertes) Bild der visuellen Informationen übertragen wird und danach jeweils nur noch die sich ändernden Bildinformationen übertragen werden. Hierdurch ist es möglich, für die Übertragung grundsätzlich auch schmalbandige Leitungen zu verwenden. Ferner werden hierdurch Latenzen vermieden, welche zu einer Verzögerung zwischen den durch den Präsentator oder Vortragenden augenblicklich dargebotenen Informationen und den zur selben Zeit von einzelnen der Präsentation folgenden Teilnehmern wahrgenommenen medialen Inhalten führen. Dabei können die letztgenannten Latenzen, wenn diese nicht vermieden werden, dazu führen, dass beispielsweise bei einer der Präsentation ortsfern folgenden Person eine Diskrepanz zwischen von ihr wahrgenommenen visuellen Inhalten und vom Vortragenden gemachten, akustisch vermittelten Äußerungen entsteht, da der Präsentator bereits Ausführungen zu visuellen Inhalten gibt, die auf dem Endgerät des Empfängers noch nicht visualisiert werden.

Ein Problem ergibt sich dadurch, dass heute im Rahmen der kollaborativen Zusammenarbeit von den daran beteiligten Nutzern sehr unterschiedliche Geräte mit entsprechend unterschiedlicher Leistungsfähigkeit verwendet werden. Dabei reicht das Spektrum der verwendeten Endgeräte von der stationär fest angeordneten High-End-Workstation bis zum mobilen Tablet-PC oder dem Smartphone. Entsprechend unterschiedlich ist die Leistungsfähigkeit der betreffenden Geräte im Hinblick auf die Ausgabe medialer Informationen, wie insbesondere visueller Inhalte. Dies ist zum Beispiel durch Randwerte wie Displaygröße und Displayauflösung bedingt. Aber auch die netzwerktechnischen Verbindungen, über welche entsprechende Endgeräte oder Gerätekonfigurationen für den Austausch der Arbeitsergebnisse beziehungsweise im Rahmen einer virtuellen Präsentation an ein Netzwerk angebunden sind, weisen naturgemäß unterschiedliche Leistungsfähigkeiten beziehungsweise Bandbreiten auf. Dies macht es erforderlich, die an die jeweiligen Empfänger beziehungsweise ihre Endgeräte übertragenen Informationen, insbesondere die medialen Inhalte, an die Leistungsfähigkeit der Netzwerkverbindungen und Geräte und/oder Gerätekonfigurationen anzupassen.

Hierzu ist es nach dem heutigen Stand der Technik üblich, dass zum Beispiel die Auflösung zur Wiedergabe visueller Informationen zwischen dem Sender (Präsentator) und den Empfängern ausgehandelt werden und der gegebenenfalls leistungsstärkere Sender die visuellen Inhalte durch ein Downscaling an die Leistungsfähigkeit der Empfänger und ihrer Anbindung an das Netzwerk anpasst. Diese Form der Transkodierung medialer Inhalte erfordert aber, insbesondere dann, wenn an einer entsprechenden virtuellen Präsentation eine Vielzahl von Empfängern mit unterschiedlichen Endgeräten oder Gerätekonfigurationen beteiligt ist, eine sehr hohe Leistungsfähigkeit des Senders, wobei die insoweit bestehenden Anforderungen bisweilen die technische Leistungs- beziehungsweise Sendefähigkeit der auf aussendender Seite vorhandenen Gerätetechnik überfordert. Dies gilt umso mehr, als die Übertragung medialer Inhalte bei der kollaborativen Zusammenarbeit stetig weiter ansteigt.

Aufgabe der Erfindung ist es, eine Lösung bereitzustellen, welche den vorgenannten Problemen Rechnung trägt. Dabei soll die entsprechende Lösung die Möglichkeiten kollaborative Zusammenarbeit bei der Durchführung von Präsentationen verbessern und diese gegebenenfalls erweitern, wobei sich diese Aufgabe insbesondere auf Präsentationen bezieht, welche im eingangs dargestellten Sinne als virtuelle Präsentationen ablaufen. Die Lösung, welche sich demnach auf Präsentationen bezieht, bei denen die jeweilige Präsentation zwar als solches real abläuft, bei dieser aber sich in unterschiedlichen Räumen oder an unterschiedlichen Standorten befindende Teilnehmer zusammenarbeiten, soll dabei eine im Hinblick auf die Hardwareanforderungen an die beteiligten Endgeräte ressourcenschonende Anpassung bei der Präsentation auszugebender medialer Inhalte an die empfängerseitige Leistungsfähigkeit, wie insbesondere an die Leistungsfähigkeit zum Verfolgen der Präsentation verwendeter Endgeräte oder Gerätekonfigurationen ermöglichen.

Die Aufgabe wird durch ein Verfahren mit den Merkmalen des Patentanspruchs 1 gelöst. Ein die Aufgabe lösendes System wird durch den ersten Sachanspruch charakterisiert. Vorteilhafte Aus- beziehungsweise Weiterbildungen sind durch die jeweiligen Unteransprüche gegeben.

Das zur Lösung der Aufgabe vorgeschlagene Verfahren geht von einer virtuellen Präsentation im eingangs erläuterten Sinne aus, bei der die von den Teilnehmern der Präsentation verwendeten Endgeräte Teil eines gemeinsam genutzten Netzwerks sind. Auf diesen Endgeräten läuft zur Durchführung der Präsentation eine Präsentationssoftware ab, bei welcher es sich um eine die kollaborative Zusammenarbeit ermöglichende Programmanwendung, vorzugsweise in Form eines Browser-Plugins, handelt. Teilnehmer der Präsentation sind ein Präsentator und mindestens ein weiterer, der Präsentation folgender Nutzer, welche sich entsprechender, in das Netzwerk eingebundener Endgeräte beziehungsweise Gerätekonfigurationen bedienen, auf denen die vorgenannte Programmanwendung abläuft. Nachfolgend soll vereinfachend von über ein Netzwerk verbundenen oder in ein Netzwerk eingebundenen Endgeräten gesprochen werden, wenngleich es sich insoweit sowohl seitens des jeweiligen Präsentators als auch seitens der Präsentation folgender Teilnehmer auch um jeweils mehrere im Rahmen der Präsentation zusammenwirkende Geräte, wie beispielsweise einen Laptop und einen an diesem betriebenen Projektor beziehungsweise Beamer zur Ausgabe von visuellen Präsentationsinhalten handeln kann. Entsprechendes gilt für die Patentansprüche, in denen ebenfalls lediglich zur sprachlichen Vereinfachung der Begriff "Endgeräte" verwendet wird, von deren Schutzumfang aber auch entsprechende auf der Seite des jeweiligen Präsentators und/oder auf der Empfängerseite bei der Präsentation verwendete Gerätekonfigurationen, das heißt Kombinationen zusammenwirkender Geräte umfasst sein sollen.

Gemäß der Aufgabe werden von dem Präsentator dargebotene mediale Inhalte zur Ausgabe an einem jeweiligen Endgerät eines der Präsentation folgenden Teilnehmers an die empfängerseitige Leistungsfähigkeit, das heißt insbesondere an die Leistungsfähigkeit des den medialen Inhalt ausgebenden Endgeräts und seiner Verbindung mit dem Netzwerk, angepasst. Zur empfängerseitigen Leistungsfähigkeit gehören dabei auch (und sind insoweit vom Schutzbegehren der Patentansprüche umfasst) in der Person des einer Präsentation folgenden Teilnehmers begründete Aspekte, zu welchen Ausführungen an späterer Stelle gegeben werden sollen. Erfindungsgemäß wird die Anpassung an die empfängerseitigen Leistungsfähigkeit realisiert, indem zunächst die die medialen Inhalte abbildenden Daten (im Weiteren und in den Ansprüchen auch "mediale Daten") der Präsentation vor der Übertragung an ein sie ausgebendes Endgerät aus dem bei der Präsentation über das Netzwerk übertragenen Datenstrom mit der Gesamtheit aller Präsentationsdaten (umfassend die medialen Daten selbst, Steuerungs- und Kontrolldaten zum Präsentationsablauf, Kommandos, allgemeine Funktionsdaten der Programmanwendung, Daten zum Sessionmanagement und gegebenenfalls Betriebssystemdaten, wie System- und Umgebungsvariablen) extrahiert werden. Die somit gewissermaßen aus dem Datenstrom der eigentlichen Programmanwendung herausgelösten und indizierten medialen Inhalte werden dann in mindestens einer dafür ausgebildeten oder eingerichteten, netzseitig in dem Netzwerk angeordnete Einrichtung, wie einem weder der Sender- beziehungsweise der Präsentatorseite, noch der Empfängerseite zuzuordnenden Server oder dergleichen, in Anpassung an die jeweilige empfängerseitige Leistungsfähigkeit skaliert. Schließlich werden die medialen Daten, gesteuert durch eine ebenfalls netzseitig angeordnete Einrichtung, zeitlich, das heißt im Hinblick auf den Präsentationsablauf, synchronisiert wieder mit den bereits genannten übrigen Präsentationsdaten (wie Steuerungs- und Kontrolldaten zum Präsentationsablauf, Kommandos, allgemeinen Funktionsdaten der Programmanwendung, Daten zum Sessionmanagement und gegebenenfalls Betriebssystemdaten, wie System- und Umgebungsvariablen) zusammengeführt. Um dies zu ermöglichen, werden in einer Initialisierungsphase, welche bei der durch den Präsentator erfolgenden Initiierung einer Präsentation angestoßen wird, durch empfängerseitig dafür ausgebildete oder eingerichtete Mittel Daten zur empfängerseitigen Leistungsfähigkeit an mindestens eine netzseitig angeordnete Einrichtung des später noch zu beschreibenden Systems, nämlich an die mindestens eine zur Skalierung der medialen Inhalte ausgebildete oder eingerichtete Einrichtung oder/und an eine das synchronisierte Zusammenführen der skalierten medialen Daten mit den übrigen Präsentationsdaten netzseitig steuernde Einrichtung, übertragen. Im Zusammenhang mit den vorstehenden und nachfolgenden Erläuterungen sei angemerkt, dass hierbei zwischen sender- oder empfängerseitig angeordneten Endgeräten sowie Einrichtungen und/oder Modulen einerseits und zwischen netzseitig angeordneten Einrichtungen andererseits unterschieden wird. Bei ersteren handelt es sich um bei dem Präsentator oder bei mindestens einer der Präsentation folgen Person angeordnete Endgeräte und Einrichtungen/Module. Letzte, also die netzseitigen Einrichtungen, sind hingegen weder der Sender- beziehungsweise der Präsentatorseite, noch der Empfängerseite zuzuordnen. Sie können vielmehr gegebenenfalls auch von anderen Personenkreisen zur Durchführung von (anderen) Präsentationen nach dem erfindungsgemäßen Verfahren genutzt werden. Im Falle einer Nutzung der netzseitigen Einrichtungen für verschiedene Präsentationen durch unterschiedliche Personenkreise ist es dabei sogar möglich, dass zwei oder mehr jeweils von verschiedenen Personenkreisen durchgeführte (virtuelle) Präsentationen gleichzeitig unter Verwendung der betreffenden netzseitigen Einrichtungen ablaufen. Zur Übermittlung der Daten zur empfängerseitigen Leistungsfähigkeit an eine netzseitige Einrichtung oder die netzseitigen Einrichtungen sollen nähere Ausführungen nochmals im Zusammenhang mit der Erläuterung des erfindungsgemäßen Systems erfolgen.

Die Zusammenstellung der Präsentation kann - was die Verweise auf die medialen Inhalte anbelangt - verschiedene Ausprägungen haben und somit verschiedene Anforderungen des zeitsynchronen empfängerseitigen Zusammenführens von medialen Daten und sonstigen Präsentationsdaten nach sich ziehen. Hinsichtlich der Verweise kann es sich je nach Art der Präsentation um einzelne Verweise (URL) auf mediale Daten in der die Skalierung der Daten vornehmenden und die skalierten Daten an die empfängerseitigen Mittel zu ihrer Zusammenführung mit den sonstigen Präsentationsdaten abgebenden Einrichtung (zum Beispiel beim klassischen Download von Bildern im Web) handeln. Es kann aber auch sein, dass es sich bei der Zusammenstellung um eine Art Playliste beziehungsweise Wiedergabeliste handelt, die die einzelnen Teile einer ganzen Präsentation referenziert (zum Beispiel M3U, als eine von Medienspielern unterstützte Playliste in Form einer editierbaren Textdatei, oder XSPF = XML Shareable Playlist Format, als Format für gemeinsam nutzbare Wiedergabelisten). Erweiterte Zusammenstellungen können auch mediale Inhalte referenzieren, die empfängerseitig gleichzeitig wiedergegeben werden sollen, sich aber unter Umständen nur über verschiedene URLs erreichen lassen.

In jedem Falle müssen die zu skalierenden und später skalierten medialen Daten in geeigneter Form indiziert oder gekennzeichnet sein, so dass sie bei der vorher beschriebenen Auswahl gefunden werden können. Eine solche Kennzeichnung könnte zum Beispiel die Größe eines Bildes sein. Dabei können die medialen Inhalte/Daten gegebenenfalls bereits von sich aus (durch entsprechende Metadaten) indiziert sein oder die Indizierung erfolgt durch das senderseitige Modul zur Trennung der medialen Daten von den übrigen Präsentationsdaten. Für die Indizierung/Kennzeichnung sind mindestens die folgenden Ordnungs- und Selektionsverfahren denkbar:
- Ablage einer Referenz in einer von einer netzseitigen Einrichtung gehaltenen Datenbank. Für jedes, mediale Inhalte betreffende skalierte Präsentationsobjekt wird ein neuer Datenbankeintrag erzeugt, der alle Attribute für das Objekt enthält und nach welchem bei einer Suche nach geeigneten skalierten Objekten gesucht werden kann.
   Eine Variante besteht dabei noch darin, dass anstelle der Referenz das Objekt selbst in der Datenbank gespeichert wird.
- Speicherung in einem "geordneten" Filesystem. Die skalierten Präsentationsobjekte mit den medialen Inhalten lassen sich nach einem vorgegebenen Schema auch in einer hierarchischen Verzeichnisstruktur speichern (zum Beispiel Bilder in verschiedenen Auflösungen liegen in entsprechend benannten Verzeichnissen). Allerdings ist diese Lösung eher unflexibel im Fall der Erweiterungen der Attribute und auch bei Überlappungen (zum Beispiel empfängerseitig verschiedene Kombinationen von Auflösung und Farbraum bei Bildern).
- Anbringung von Tags. Viele Mediendatenformate ermöglichen es, Metainformationen in Form von Tags in den Datenobjekten beziehungsweise den Präsentationsobjekten mit den medialen Inhalten selbst zu speichern - zum Beispiel EXIF (Exchangeable Image File Format) bei im JPEG-Format komprimiert gespeicherten Bildern, MPEG-7, als Standard zur Beschreibung (multi-) medialer Inhalte bei nach dem Standard MPEG-2 komprimierten und kodierten Videoinhalten, ID3 als Metadatencontainer für nach dem MP3-Standard komprimierten Audiodaten. Sofern dies nicht möglich ist, erfolgt das Speichern der Metadaten in separaten Dateien. Der Vorteil ist, dass die Metadaten immer bei den zu präsentierenden medialen Inhalten verbleiben. Ein Nachteil ist allerdings, dass eine Suche ohne vorheriges Durchsuchen und Zwischenspeichern in einer Datenbank sehr langwierig sein kann, da immer alle Objekte nach den entsprechenden Metadaten durchsucht werden müssen.

Die medialen Inhalte beziehungsweise Daten müssen aber nicht immer am Stück an die Empfängerseite übermittelt werden. Um zum Beispiel das http-Protokoll, das eigentlich nicht für das Streaming von Mediendaten entwickelt wurde, auch dafür nutzen zu können, wurde in die Protokollversion http/1.1 ein Transfermechanismus namens "Chunked Transfer Encoding" eingeführt. Hiermit lässt sich auf einzelne Bestandteile eines größeren Datenobjekts zugreifen, ohne dass die ganze Datei auf einmal heruntergeladen werden muss. So können zum Beispiel jeweils Kapitel/Abschnitte in einem Video oder einzelne Seiten in einer statischen Präsentation übertragen werden.

Die medialen Daten können gemäß der Erfindung unmittelbar während der Präsentation aus der Gesamtheit der Präsentationsdaten extrahiert und im Zusammenhang mit ihrer Skalierung auf der dafür ausgebildeten oder eingerichteten, in dem Netzwerk angeordneten Einrichtung temporär gespeichert werden. Von einer temporären Speicherung der Daten sind in diesem Kontext und von der erfindungsgemäßen Lösung die Möglichkeit einer Speicherung im Sinne eines Pufferns umfasst, aber ebenso auch die eines kurzeitigen Speicherns im Sinne eines Caching oder die Kombination aus beidem. Im Falle des Pufferns dient das temporäre Speichern der medialen Daten zum Ausgleich unterschiedlicher Datenübertragungsraten beziehungsweise Übertragungsgeschwindigkeiten zwischen den bei der netzseitigen Einrichtung zur Skalierung eingehenden Daten und den nach der Skalierung ausgehenden Daten, welche zur Zusammenführung mit den übrigen Präsentationsdaten an dafür empfängerseitig, also bei einem der Präsentation folgenden Nutzer vorgesehene Mittel weitergeleitet werden. Beim Caching erfolgt eine Speicherung der extrahierten medialen Daten für die Dauer einer Präsentation, mit der Möglichkeit auf die bereits skalierten medialen Inhalte beziehungsweise Daten wiederholt zuzugreifen, um beispielsweise dem Präsentator die Rückkehr zu einem früheren Punkt im Präsentationsablauf zu ermöglichen.

Alternativ zu der zuvor erläuterten Möglichkeit einer temporären Speicherung besteht aber auch die Möglichkeit, dass die medialen Daten bereits vor der Durchführung der Präsentation aus der Gesamtheit der Präsentationsdaten extrahiert und zur Speicherung auf die netzseitige Einrichtung zu ihrer Skalierung übertragen werden. Hierdurch ist es zum Beispiel möglich, dass ein Präsentator eine von ihm zu einem früheren Zeitpunkt erstellte Präsentation anstößt, ohne dass er sich hierbei in seinem üblichen Arbeitsumfeld aufhält. Möglich ist etwa der Start einer Präsentation mittels eines von dem Präsentator auf einer Zugreise mitgeführten Smartphones, wobei die Präsentation die Darbietung zuvor von ihm auf die entsprechende netzseitig vorgesehene Plattform beziehungsweise Einrichtung übertragener medialer Daten beziehungsweise Inhalte umfasst. Gegebenenfalls kann darüber hinaus auch die Skalierung dieser medialen Daten bereits vor der Durchführung der Präsentation erfolgen. Dies setzt selbstverständlich voraus, dass die bereits erwähnte, der eigentlichen Präsentation zeitlich vorgelagerte Initialisierungsphase, in welcher mindestens eine der netzseitigen Einrichtungen Daten zur empfängerseitigen Leistungsfähigkeit erhält, entsprechend rechtzeitig durchlaufen wird. Letzteres, also eine Vorab-Skalierung der Daten eröffnet die Möglichkeit, eine eventuell sehr aufwendige Skalierung in möglichst hoher Qualität zeitunkritisch vor der Präsentation durchzuführen. Insbesondere im Hinblick auf eine vor der Präsentation erfolgende netzseitige Speicherung der Daten und deren gegebenenfalls auch vorab erfolgende Skalierung können bei einer Präsentation, bei welcher deren Teilnehmer über das Internet oder über ein LAN (Local Area Network = lokales Netzwerk) miteinander kommunizieren, entsprechende Mittel beziehungsweise die Einrichtung(en) zur Speicherung und/oder zur Skalierung auch im Rahmen eines Clouddienstes realisiert sein, also eines Dienstes, der über ein Netzwerk erreichbar und nutzbar ist, aber nicht auf den Endgeräten der Präsentationsteilnehmer ausgeführt oder betrieben wird, sondern auf einer netzseitigen, zentral oder verteilten Einrichtung zur Verfügung gestellt wird.

In diesem Zusammenhang sei darauf hingewiesen, dass es sich bei der in den vorstehenden und den nachfolgenden Erläuterungen sowie in den Patentansprüchen angesprochenen Einrichtung zur Skalierung (und zur temporären oder gegebenenfalls voraberfolgenden Speicherung der Daten) und bei den netzseitigen Mitteln zur Steuerung der Präsentation beziehungsweise des zeitlich synchronisierten Zusammenführens der skalierten medialen Daten mit den übrigen Präsentationsdaten analog zu den sender- und empfängerseitigen Endgeräten um einzelne Eirichtungen/Server oder dergleichen, aber auch um mehrere miteinander interagierende Einrichtungen handeln kann. Insoweit soll lediglich zur Vereinfachung von einer Einrichtung zur Skalierung gesprochen werden.

Der grundsätzliche Ansatz des vorgeschlagenen Verfahrens besteht also darin, die medialen Inhalte von den übrigen durch die Präsentationssoftware zur Durchführung der Präsentation übertragenen Präsentationsdaten, wie Konfigurations-, Steuer- und/oder Kontrolldaten und/oder Kommandos, zu trennen, sie gesondert aufzubereiten, nämlich sie mittels entsprechend leistungsfähiger netzseitiger (beispielsweise im Rahmen von Clouddiensten zur Verfügung gestellten) Einrichtungen, zu skalieren und dann den Datenstrom vor der Weiterleitung an das die medialen Inhalte für die der Präsentation folgenden Nutzer ausgebende Endgerät, wieder geordnet zusammenzuführen. Durch die Verlagerung der eigentlichen Skalierungsarbeit auf eine zentrale Ebene, nämlich auf eine oder mehrere netzseitige Einrichtungen können Nutzer unterschiedlichster Endgeräte mit insbesondere unterschiedlicher Leistungsfähigkeit im Rahmen der kollaborativen Zusammenarbeit an Präsentationen teilnehmen, ohne dafür besondere Vorkehrungen oder Anpassungen zur Skalierung an den von ihnen verwendeten Endgeräten vornehmen zu müssen. Die hierzu neben der Einrichtung oder den Einrichtungen zur Skalierung der extrahierten medialen Inhalte erforderlichen netzseitigen Module beziehungsweise Einrichtungen können innerhalb des Netzwerks an unterschiedlicher Stelle ausgebildet beziehungsweise angeordnet sein, wobei Ausführungen zu einer bevorzugten Konfiguration im Rahmen der Erläuterung des beanspruchten Systems erfolgen sollen.

Der mehrfach angesprochene Vorgang der Skalierung bezieht sich insbesondere darauf, die entsprechenden, die medialen Inhalte abbildenden Daten zur Anpassungen an weniger leistungsfähige Endgeräte herunterzurechnen. Grundsätzlich wäre es aber auch denkbar, die Daten durch Extrapolation zur Ausgabe mittels besonders leistungsstarker Endgeräte hochzurechnen. Die Skalierung bezieht sich hierbei zum Beispiel auf eine entsprechende Anpassung von Parametern wie Pixelauflösungen oder Seitenverhältnisse visueller Darstellungen, Komprimierungsfaktoren, Zahl und Art (Mono, Stereo oder Surround) der Audiokanäle sowie die Audioqualität, Frequenzbereich und/oder Lautstärke für auszugebende Audioinformationen. Ergänzend sei noch angemerkt, das die erfindungsgemäße Lösung grundsätzlich auch eine Skalierung zur Anpassung der medialen Daten an das Wahrnehmungsvermögen eines einer Präsentation folgenden Teilnehmers ermöglicht. Insoweit sind von dem ebenfalls in den Patentansprüchen verwendeten Begriff der empfängerseitigen Leistungsfähigkeit auch nichttechnische Aspekte umfasst. Im letztgenannten Falle wären am teilnehmerseitigen Endgerät beziehungsweise an den teilnehmerseitigen Einrichtungen entsprechende Angaben zu hinterlegen, welche dann im Sinne der Erfindung in der Initialisierungsphase in Form von Daten zur teilnehmerseitigen Leistungsfähigkeit an mindestens eine der netzseitigen Einrichtungen übertragen werden. Auf diese Weise könnten zum Beispiel ein Audiosignal für einen der Präsentation folgenden Teilnehmer mit eingeschränktem Hörvermögen in Richtung größerer Lautstärke skaliert oder/und Untertitel generiert und eingeblendet werden. Entsprechendes wird im Oberbegriff des Patentanspruchs 1 durch die Verwendung des Wortes "insbesondere" bei der näheren Spezifizierung der empfängerseitigen Leistungsfähigkeit zum Ausdruck gebracht. Demnach bezieht sich die empfängerseitige Leistungsfähigkeit nach dem der Darstellung der Erfindung in der Beschreibung und den Patentansprüchen zugrunde liegenden Verständnis, wie bereits ausgeführt, nicht zwingend und nicht ausschließlich auf rein technische Sachverhalte.

Gemäß einer bevorzugten Verfahrensgestaltung erfolgt die Extraktion der medialen Inhalte aus dem bei der Präsentation übertragenen Datenstrom mit der Gesamtheit der auch Steuerungs- und Kontrolldaten und dergleichen umfassenden Präsentationsdaten senderseitig, das heißt durch dafür ausgebildete oder eingerichtete Mittel beim Präsentator. Weiterhin ist das Verfahren vorzugsweise so gestaltet, dass das Zusammenfügen der skalierten medialen Inhalte mit den übrigen Präsentationsdaten, das heißt mit Steuerungs- und Kontrolldaten und dergleichen, empfängerseitig, nämlich durch bei einem die medialen Inhalte lokal ausgebenden Endgerät eines der Präsentation folgenden Nutzers, erfolgt.

Entsprechend einer vorgesehenen Weiterbildung des Verfahrens ist während einer Präsentation ein Wechsel zwischen der Sender- und Empfängerseite ermöglicht. Nach einem solchen Wechsel werden durch ein ursprünglich zum Verfolgen einer Präsentation verwendetes Endgerät mediale Inhalte präsentiert, das heißt, Daten zu einer Präsentation ausgesendet, wobei der dieses Endgerät verwendende Nutzer zum Präsentator wird. Damit korrespondierend werden demzufolge die betreffenden medialen Inhalte durch ein vorher zur Aussendung von Präsentationsdaten verwendetes Endgerät lokal ausgegeben. Hierdurch wird der dieses Endgerät verwendende, zuvor selbst als Präsentator agierende Nutzer zu einem der Präsentation folgenden Nutzer beziehungsweise Teilnehmer. Bevorzugt ist es dabei, dass der Wechsel zwischen der Sender- und Empfängerseite durch das zuvor zur lokalen Ausgabe der medialen Inhalte einer Präsentation verwendete Endgerät initiiert und durch dafür ausgebildete oder eingerichtete, netzseitig angeordnete Mittel gesteuert wird. Hierbei wird durch das zuvor genannte Endgerät an die betreffenden netzseitigen Mittel eine entsprechende Anfrage zur Übernahme der Präsentatorrolle gerichtet. Sofern der Anfrage entsprochen wird, quittieren die entsprechenden netzseitigen Mittel beziehungsweise Einrichtungendies dem anfragenden Endgerät und weisen gleichzeitig dem zuvor zur Versendung von Präsentationsdaten verwendeten Endgerät des bis dahin als Präsentator agierenden Nutzers die Empfängerrolle beziehungsweise Empfängerfunktion zu.

Ein die Aufgabe lösendes, zur Durchführung einer virtuellen Präsentation bei der kollaborativen Zusammenarbeit geeignetes System besteht aus mindestens zwei, zumindest während der Präsentation über ein Netzwerk miteinander verbundenen Endgeräten, von denen mindestens eines zumindest zur Aussendung von Präsentationsdaten (wobei dieses Endgerät die davon umfassten medialen Daten selbst hält oder sie gegebenenfalls auch erst von einer externen Quelle bezieht) und mindestens eines zumindest zum Empfang von Präsentationsdaten sowie zur lokalen Ausgabe eines medialen Inhalts der Präsentation ausgebildet ist. Ferner gehört zu dem System mindestens eine mediale Inhalte für die Präsentation bereitstellende Medienquelle, welche sich im Zugriff eines Präsentationsdaten aussendenden Endgeräts befindet. Im Zugriff des Endgeräts meint dabei, dass dieses entweder selbst die Medienquelle hält oder mit einer externen Medienquelle beziehungsweise einer eine solche Medienquelle haltenden Einrichtung zum Bezug der Mediendaten interagiert. Darüber hinaus gehören zum System netzseitig angeordnete, also weder der Senderseite noch der Empfängerseite zuzurechnende, aber in das Netzwerk eingebundene Einrichtungen zur Übertragung von einem Endgerät ausgesendeter Präsentationsdaten an mindestens ein diese empfangendes Endgerät. Erfindungsgemäß ist dabei einem Präsentationsdaten mit medialen Inhalten aussendenden Endgerät ein Modul zur Extraktion der medialen Inhalte aus dem zur Präsentation übertragenen Datenstrom mit der Gesamtheit der Präsentationsdaten zugeordnet. Zudem ist zumindest eine der vorgenannten netzseitigen Einrichtungen zur Skalierung der extrahierten medialen Inhalte ausgebildet oder eingerichtet. Einem mediale Inhalte der Präsentation ausgebenden Endgerät sind ein Modul zum Zusammenfügen der skalierten medialen Inhalte mit den übrigen Präsentationsdaten des diese medialen Inhalte ursprünglich enthaltenden Datenstroms und ein Modul (vorzugsweise identisch mit dem vorgenannten Modul) zugeordnet, welches in einer Initialisierungsphase der Präsentation Daten zur Leistungsfähigkeit des den medialen Inhalt empfangenden und lokal ausgebenden Endgeräts und seiner Verbindung mit dem Netzwerk an die netzseitige Einrichtung zur Skalierung der medialen Inhalte und/oder an eine weitere, ebenfalls in dem Netzwerk, das heißt netzseitig angeordnete Einrichtung überträgt. Bei der letztgenannten Einrichtung handelt es sich um eine Einrichtung, welche die Weiterleitung der skalierten medialen Inhalte und der mit diesen zusammenzufügenden Präsentationsdaten an das hierfür empfängerseitig vorgesehene, diese wieder zusammenführende Modul synchronisiert und damit die Präsentation aus der Sicht des oder der ihr folgenden Nutzer und der von ihnen verwendeten Endgeräte insbesondere dahin gehend steuert, dass die darzubietenden Inhalte der Präsentation synchron zu dem durch den Präsentator vorgegebenen zeitlichen Ablauf zur Ausgabe gebracht werden. Diese Einrichtung kann dabei auch als Bestandteil der netzseitigen Einrichtung zur Skalierung der extrahierten Medialen Inhalte ausgebildet beziehungsweise mit dieser zusammen auf einer gemeinsam genutzten Netzwerkplattform implementiert sein. Beide vorgenannten, wie gesagt, gegebenenfalls auch hardwaremäßig zusammengefassten netzseitigen Einrichtungen (Einrichtung zur Skalierung sowie Einrichtungen zur Steuerung der Koordination der Präsentation zwischen Sender beziehungsweise Präsentator und Empfänger) können dabei auch Teil eines Clouddienstes mit der Möglichkeit des temporären Zwischenspeicherns oder längerfristigen Speicherns für Präsentationen verwendeter medialer Daten sein.

Wie bereits ausgeführt, werden die Daten zur empfängerseitigen Leistungsfähigkeit beziehungsweise entsprechende Attribute zumindest an eine der netzseitig zur Durchführung des Verfahrens angeordneten Einrichtungen übertragen. Die Ermittlung der Daten zur empfängerseitigen Leistungsfähigkeit beziehungsweise die Erzeugung der entsprechenden Attribute erfolgt dabei durch das dem Endgerät beim Empfänger, also bei der mindestens einen der Präsentation folgenden Person zugeordnete Modul. Für deren Übermittlung an die netzseitige(n) Einrichtunge(en) sind dabei in Abhängigkeit der konkreten Ausgestaltung des Verfahrens verschiedene Varianten möglich. Ein erste besteht darin, dass die vorgenannten Attribute durch das vorgenannte Modul selbsttätig an die bereits erwähnte, den Ablauf der Präsentation, insbesondere die zeitlich synchronisierte Zusammenführung der skalierten medialen Inhalte mit den übrigen Präsentationsdaten netzseitig steuernde Einrichtung übermittelt werden. Diese ermittelt aus den Daten die korrekte Zusammensetzung der (skalierten) Mediendaten in der die Skalierung durchführenden netzseitigen Einrichtung und übergibt diese Zusammenstellung an das empfängerseitig dem für die Präsentation genutzten Endgerät zugeordnete (Synchronisations-) Modul zur Zusammenführung der medialen Inhalte mit den übrigen Präsentationsdaten. Das letztgenannte Modul lädt dann die (skalierten) medialen Inhalte entweder selbstständig oder aufgrund der Präsentationssteuerung von der netzseitigen Einrichtung zur Skalierung der medialen Daten.

Eine zweite Variante besteht darin, dass die Attribute ausgehend von der netzseitigen Einrichtung zur Steuerung der Präsentation, das heißt zur Steuerung der zeitlich synchronisierten Zusammenführung von medialen Inhalten und übrigen Präsentationsdaten, gesammelt und verarbeitet werden. Sie werden hierbei von der netzseitigen Einrichtung bei dem dazu dem empfängerseitigen Endgerät zugeordneten Modul abgefragt. Der Ablauf gestaltet sich im Weiteren wie zur ersten Variante ausgeführt.

Eine weitere Variante besteht darin, dass die Daten zur empfängerseitigen Leistungsfähigkeit beziehungsweise die diese abbildenden Attribute von dem empfängerseitigen Modul an die netzseitige Einrichtung zur Skalierung der medialen Inhalte übertragen wird. Während der Präsentation erhält die netzseitige Einrichtung zu deren Steuerung (Steuerung des zeitlich synchronisierten Zusammenführens der skalierten medialen Daten mit den übrigen Präsentationsdaten) nur eine "grobe" Zusammenstellung der zur Präsentation gehörenden medialen Inhalte, die zwar generell auf einzelne Teile dieser Inhalte verweist, aber noch keine bestimmte Präsentationsform angibt (wie zum Beispiel die empfängerseitige Auflösung). Die wird dann zwischen den netzseitigen Einrichtungen abgestimmt, indem beim Zugriff neben der Referenz auf das gewünschte Teilobjekt der medialen Inhalte auch die Attribute übergeben werden. Die Einrichtung zur Skalierung der medialen Inhalte sorgt schließlich direkt für eine zeitlich beziehungsweise bezüglich des Ablaufs korrekte Rückgabe (das heißt insbesondere Ausgabe an die Empfängerseite) der skalierten Daten.

Ferner ist noch folgendes Szenario möglich. Die Daten zur empfängerseitigen Leistungsfähigkeit beziehungsweise die sie repräsentierenden Attribute werden ausgehend von der netzseitigen Einrichtung zur Steuerung der Präsentation, das heißt der zeitlich synchronisierten Zusammenführung von medialen Inhalten und übrigen Präsentationsdaten, gesammelt und verarbeitet. Sie werden dazu von der netzseitigen Einrichtung bei dem empfängerseitig (in Zuordnung zu dem für das Verfolgen der Präsentation verwendeten Endgerät) angeordneten Modul abgefragt. Während der Präsentation erhält die netzseitige Einrichtung zu deren Steuerung (Steuerung des zeitlich synchronisierten Zusammenführens der skalierten medialen Daten mit den übrigen Präsentationsdaten) nur eine "grobe" Zusammenstellung der zur Präsentation gehörenden medialen Inhalte, die zwar generell auf einzelne Teile dieser Inhalte verweist, aber noch keine bestimmte Präsentationsform angibt (wie zum Beispiel die empfängerseitige Auflösung), wobei die entsprechenden Daten zusätzlich (im Hinblick auf eine eventuell gleichzeitige Nutzung der netzseitigen Einrichtungen für mehrere verschiedene Präsentationen) mit jeweils einer ID für die Präsentation und für das die medialen Daten mit den übrigen Präsentationsdaten empfängerseitig zusammenführende Modul versehen sind. Die Präsentationsform wird zwischen der netzseitigen Einrichtung zur Skalierung der medialen Inhalte und der netzseitigen Einrichtung zur Steuerung der Präsentation (insbesondere des zeitlich synchronisierten Zusammenführens der skalierten medialen Inhalte mit den übrigen Präsentationsdaten auf der Empfängerseite) abgestimmt. Dazu werden die vorgenannten ID's zur Ermittlung oder Berechnung der Attribute verwendet. Diese werden dann genutzt, um die korrekten skalierten medialen Inhalte in der netzseitigen Einrichtung zu ihrer Skalierung zu ermitteln beziehungsweise dort berechnen zu lassen und das Ergebnis als Präsentationsteilobjekt an das empfängerseitige Modul für die Zusammenführung der jeweiligen medialen Daten mit den übrigen Präsentationsdaten zu übermitteln. Darüber hinaus sind aber auch Szenarien denkbar, bei denen die Daten zur empfängerseitigen Leistungsfähigkeit selbsttätig oder auf Anfrage von dem empfängerseitigen Modul für die Zusammenführung der skalierten medialen Daten mit den übrigen Präsentationsdaten an beide netzseitigen Einrichtungen übertragen werden.

Bei den Modulen, welche senderseitig dem vom Präsentator verwendeten Endgerät und empfängerseitig dem zur lokalen Ausgabe der medialen Inhalte verwendeten Endgerät zugeordnet sind, kann es sich um selbstständige, mit entsprechender Software ausgestattete Einheiten handeln. Es kann sich aber ebenso um herunterladbare, durch die Endgeräte selber im Zusammenhang mit der Programmanwendung zur Präsentation als Plugin ausgeführte Programmanwendungen handeln. Im letztgenannten Falle ist es beispielsweise denkbar, dass auch diese Module in Art eines Plugins für eine browserbasierte Präsentationssoftware ausgebildet sind. Entsprechend dem hier zugrunde gelegten Verständnis handelt es sich bei einer solchen browserbasierten Präsentationssoftware um eine Software, bei welcher mediale Inhalte in einem oder mehreren Fenstern eines Browsers, nämlich eines Computerprogramms zur Darstellung von Internetseiten beziehungsweise zur Ausgabe von Dokumenten und Daten allgemein, ausgegeben werden. Hierbei kann die Funktionalität - Extraktion der medialen Inhalte aus dem Datenstrom mit den Präsentationsdaten einerseits und/oder Zusammenführen der skalierten medialen Inhalte mit den Präsentationsdaten andererseits - beispielsweise mittels einer dynamischen Auszeichnungssprache, wie HTML, in Verbindung mit einer Skriptsprache, wie Javascript, realisiert werden.

Besonders bevorzugt ist es, im Hinblick auf die Möglichkeit eines gemäß dem Verfahren vorgesehenen Rollenwechsels, wenn den Endgeräten aller an einer Präsentation teilnehmenden Nutzer jeweils Module zugeordnet sind, welche beide Funktionalitäten bereitstellen. Die Module, welche im Hinblick auf die erforderliche zeitliche Synchronisierung der Abläufe beim Versenden der Präsentationsdaten, aber insbesondere bei deren Empfang auf der Empfängerseite, eng mit der die Präsentation steuernden netzseitigen Einrichtung beziehungsweise Komponente zusammenarbeiten, sollen nachfolgend auch als Medien- und Präsentations-Koordinator bezeichnet werden. Analog wird/werden die mit ihnen interagierende netzseitige(n) Einrichtung(en), im Hinblick auf deren für die Benutzer, nämlich den Präsentator und den oder die der Präsentation folgenden Teilnehmer, im Allgemeine nicht bekannte physische Lokalisierung im Netzwerk beziehungsweise innerhalb der Cloud, im Weiteren auch als netzseitiger Koordinator bezeichnet. Wesentliche Aufgabe dieser Koordinator, insbesondere des netzseitigen Koordinators ist dabei die Synchronisation der Präsentation im Hinblick auf die zeitliche Koordination des jeweils augenblicklich durch den Präsentator Dargebotenen und der auf dem oder den Endgeräten teilnehmender Nutzer zur Ausgabe gebrachten Inhalten. Gegebenenfalls, nämlich wenn wie gemäß entsprechender Ausbildungen vorgesehen, die zu präsentierenden medialen Daten teilweise oder vollständig auf der oder den netzseitigen Einrichtungen während der Präsentation im Sinne eines Pufferns und/oder eines Caching temporär gespeichert oder die medialen Daten in Gänze vorab auf diese netzseitige(n) Einrichtung(en) zur Speicherung hochgeladen werden, bezieht sich diese Funktion des Synchronisierens auch auf die zeitlich richtige empfängerseitige Bereitstellung in den netzseitigen Einrichtungen gespeicherter medialer Daten.

Was die Frage der Skalierung der medialen Daten zur Anpassung an die empfängerseitige Leistungsfähigkeit anbelangt, so sind entsprechende Softwareverfahren, mit denen beispielsweise die Auflösung einer visuellen Darstellung heruntergerechnet werden kann, grundsätzlich bekannt. Sie sind insoweit in ihrer konkreten Ausbildung nicht Gegenstand der Erfindung.

Anhand von Zeichnungen soll nachfolgend ein Ausführungsbeispiel der Erfindung erläutert werden. In den zugehörigen Zeichnungen zeigen:
- Fig. 1:: eine schematische Darstellung einer Ausbildungsform des erfindungsgemäßen Systems,
- Fig. 2:: ein Sequenzdiagramm mit den Abläufen nach dem erfindungsgemäßen Verfahren.

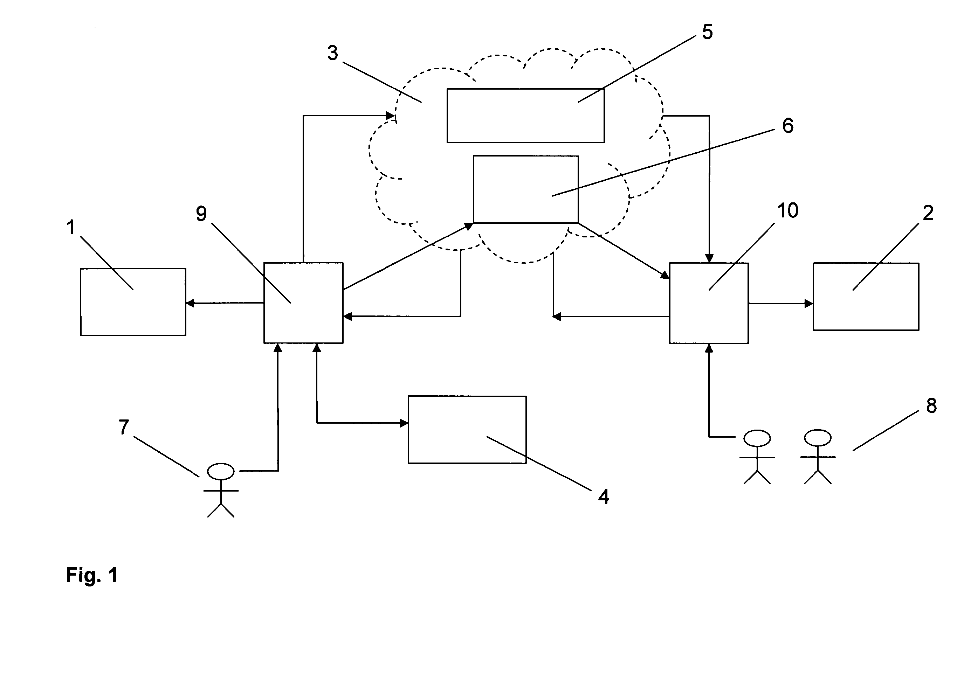

Die Fig. 1 zeigt eine mögliche Ausbildungsform des erfindungsgemäßen Systems in einer schematischen Darstellung. Demgemäß sind bei der Durchführung einer virtuellen Präsentation zumindest zwei Endgeräte 1, 2 über ein Netzwerk 3 miteinander verbunden. Eines der Endgeräte 1, 2 wird durch einen Nutzer 7 des Systems, einen Präsentator, zur Darbietung einer Präsentation unter Verwendung medialer Inhalte verwendet. An dem anderen Endgerät 2 wird die entsprechende, über das Netzwerk 3 übermittelte Präsentation durch einen oder mehrere Nutzer 8 verfolgt. Der Präsentator und die empfängerseitig die Präsentation verfolgenden Nutzer 8 arbeiten während der Durchführung der virtuellen Präsentation mittels einer auf ihren Endgeräten 1, 2 ablaufenden, die kollaborative Zusammenarbeit ermöglichenden Präsentationssoftware zusammen.

Die vom Präsentator bei der Präsentation verwendeten medialen Inhalte werden durch eine senderseitig lokal angeordnete Medienquelle 4 bereitgestellt. Die Präsentationsdaten, einschließlich der darin enthaltenen, zuvor von der Medienquelle 4 bezogenen medialen Inhalte, werden vom Endgerät 1 des Präsentators 7 durch die darauf ablaufende Programmanwendung als Datenstrom in Richtung Netzwerk 3 ausgesendet. Dem Grundgedanken der Erfindung folgend, ist dem betreffenden Endgerät 1 des Präsentators ein Medien- und Präsentations-Koordinator (Modul 9) zugeordnet, in diesem Falle eine gesonderte Einrichtung durch welche die medialen Inhalte aus dem ausgesendeten Datenstrom extrahiert werden. Gemäß dem schematisch gezeigten Beispiel werden durch diesen Präsentations-Koordinator auch die medialen Daten zum Bezug durch das Endgerät 1 des Präsentators 7 von der Medienquelle 4 angefordert.

Die extrahierten medialen Inhalte werden an das Endgerät 2 der die Präsentation verfolgenden Nutzer über ein so genanntes Mediencenter (Einrichtung 5) geleitet. Bei diesem Mediencenter handelt es sich um eine netzseitige Einrichtung 5, durch welche die aus dem Datenstrom extrahierten medialen Inhalte, beispielsweise visuelle Inhalte, wie Bilder oder Videos, in Anpassung an die empfängerseitige Leistungsfähigkeit skaliert werden. Die entsprechenden (von den sonstigen Präsentationsdaten getrennten) medialen Daten können dabei gegebenenfalls bereits vor dem Start und Ablauf einer Präsentation an das Mediencenter übertragen und dort in einem netzseitigen Speicher für den späteren Abruf vorgehalten werden. Die Nutzer (Präsentator 7 und eine Präsentation verfolgende Teilnehmer 8) müssen sich hierbei keinerlei Gedanken machen, wo beziehungsweise durch welche netzseitigen Einrichtungen die medialen Daten physisch tatsächlich gespeichert und gegebenenfalls später skaliert werden.

Zum Beginn der (virtuellen) Präsentation hat die netzseitige Einrichtung 5 zur Skalierung der medialen Daten in einer Initialisierungsphase durch den empfängerseitig angeordneten Medien- und Präsentations-Koordinator, also das Modul 10 Daten erhalten, durch welche die Leistungsfähigkeit des empfängerseitig zum Verfolgen der Präsentation verwendeten Endgeräts 2 und die Leistungsfähigkeit der Verbindung, über welche dieses Endgerät an das Netzwerk angebunden ist, abgebildet werden. Bezüglich der Leistungsfähigkeit des Endgeräts 2 handelt es sich dabei beispielsweise um Angaben beziehungsweise Attribute zur Größe und Auflösung eines Displays des betreffenden Endgeräts. Die Leistungsfähigkeit der dieses Endgerät 2 an das Netzwerk 3 anbindenden Verbindung wird beispielsweise durch Parameter wie die Bandbreite der Verbindung beziehungsweise die maximal erzielbare Datenübertragungsrate oder die Dienstgüte der Verbindung charakterisiert.

Unter Zugrundelegung der demgemäß zur empfängerseitigen Leistungsfähigkeit erhaltenen Daten wird der am Mediencenter (Einrichtung 5) vom Endgerät 1 des Präsentators 7 beziehungsweise von dem ihm zugeordneten Medien- und Präsentations-Koordinator (Modul 9) während der Präsentation eingehende oder bereits zu einem früheren Zeitpunkt empfangene Datenstrom mit den ausschließlich medialen Inhalten skaliert. Dabei wird die Übertragung der entsprechenden, die medialen Inhalte abbildenden Daten einerseits und der sonstigen Präsentationsdaten (Steuerdaten, Kontrolldaten, Kommandos, Funktionsdaten der zur Präsentation verwendeten Programmanwendung, gegebenenfalls Betriebssystemdaten und dergleichen) andererseits zur Empfängerseite durch den netzseitigen Koordinator (Einrichtung 6) zeitlich synchronisiert. Er steuert die Präsentation derart, dass die skalierten medialen Inhalte und die sonstigen Präsentationsdaten durch den empfängerseitigen Medien- und Präsentations-Koordinator (Modul 10) zeitrichtig wieder zusammengeführt und dem zum Verfolgen der Präsentation verwendeten Endgerät 2 zugeführt werden. Die der Präsentation folgenden Nutzer 8 haben hierbei die Möglichkeit, durch eine entsprechende, über den empfängerseitigen Medien- und Präsentations-Koordinator (Modul 5) angestoßene Anfrage einen Rollentausch zu erwirken, so dass sie beziehungsweise eine dieser Personen selbst zu einem Präsentator wird, der mittels des von ihm verwendeten Endgeräts eine Präsentation darbietet. Die entsprechende Anfrage wird vom empfängerseitigen Medien- und Präsentations-Koordinator (Modul 10) an den netzseitigen Koordinator (Einrichtung 6) und von diesem schließlich zu dem Medien- und Präsentations-Koordinator (Modul 9) weitergeleitet, welcher das Endgerät 1 des ursprünglichen Präsentators in einen Ausgabemodus zur lokalen Ausgabe medialer Inhalte einer Präsentation versetzt. Hierdurch wird der ursprüngliche Präsentator 7 nun zu einem der Präsentation folgenden Nutzer. Während die eigentlichen medialen Daten in dem Mediencenter, also der netzseitigen Einrichtung 5 bearbeitet, das heißt skaliert werden, wird durch den netzseitigen Koordinator, also die Einrichtung 6, die restliche kollaborative Zusammenarbeit (also die Bearbeitung der nicht medialen Präsentationsdaten mit, in der Regel, Basis-Technologien aus dem Stand der Technik) cloudbasiert abgewickelt. Hierzu gehören beispielsweise auch das Sessionmanagement mit Nutzerauthentifizierung, die Steuerung beziehungsweise Delegation der Kontrolle und dergleichen.

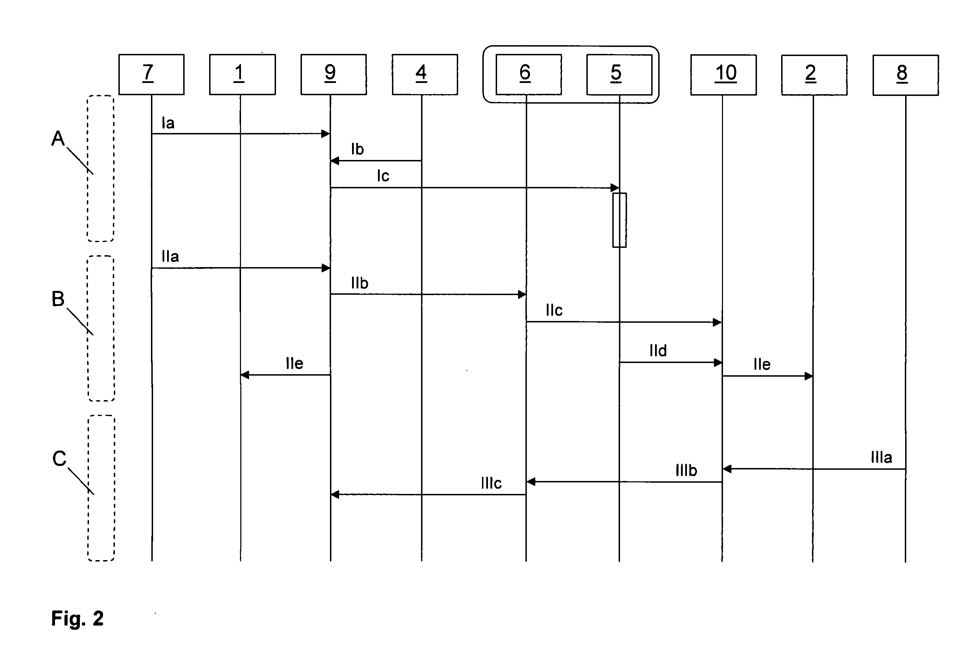

In der Fig. 2 sind mittels eines Sequenzdiagramms die Abläufe bei einer virtuellen Präsentation über ein Netzwerk 3 beziehungsweise unter Nutzung von in der Art eines Clouddienstes in dem Netzwerk 3 bereitgestellten Ressourcen, einschließlich eines Rollenwechsels zwischen Präsentator und Präsentation verfolgender beziehungsweise verfolgenden Personen(en) dargestellt. Die Präsentation läuft demnach wie folgt ab:

### A Initialisierung:

la) Durch den Präsentator 7 beziehungsweise das von ihm zur Präsentation verwendete Endgerät 1 wird eine Präsentation initiiert beziehungsweise gestartet.
Ib) Dabei zu verwendende medialen Inhalte werden, veranlasst durch den Präsentations-Koordinator (Modul 9), von der lokal angeordneten Datenquelle 4 ausgelesen. In dem senderseitigen Medien- und Präsentations-Koordinator (Modul 9) werden aus dem im Rahmen der Präsentation übertragenen Datenstrom die medialen Inhalte extrahiert (hierbei wird von einer nicht vorab erfolgenden Speicherung medialer Daten in dem Mediencenter (Einrichtung 5), das heißt demnach von deren Übertragung während der Präsentation sowie gegebenenfalls ihrer temporären Pufferung in dem Mediencenter (Einrichtung 5) ausgegangen).
Ic) Die medialen Inhalte werden in das Mediencenter (Einrichtung 5) übertragen, wobei hiervon auch die Möglichkeit eines Streaming der betreffenden Inhalte umfasst ist.

### B Präsentation:

IIa) Nachdem die Initialisierungsphase abgeschlossen ist, in welcher durch den empfängerseitigen Medien- und Präsentations-Koordinator (Modul 10) Daten zur empfängerseitigen Leistungsfähigkeit an den netzseitigen Koordinator (Einrichtung 6) übertragen werden, wird vom Präsentator 7 die eigentliche Präsentation gestartet.
IIb) Die Präsentationskontrolle erfolgt durch den netzseitigen Koordinator (Einrichtung 6).
IIc) Die die Kontrolle beziehungsweise Steuerung der Präsentation wird durch den netzseitigen Koordinator (Einrichtung 6) empfängerseitig an den Medien- und Präsentations-Koordinator (Modul 10) übertragen.
IId) Synchronisiert durch den netzseitigen Koordinator (Einrichtung 6) werden die im Mediencenter (Einrichtung 5) verfügbaren skalierten medialen Inhalte ebenso an den empfängerseitigen Medien- und Präsentations-Koordinator (Modul 10) Daten übertragen/gestreamt.
IIe) Auf beiden an der Präsentation beteiligten Endgeräten 1,2 erfolgt dann die Darstellung der zusammengefügten Multimediainhalte mit den sonstigen Datenströmen der Anwendung.

### C Rollenwechsel: (Delegated Control)

IIIa) Durch einen der Präsentation folgenden Nutzer 8 wird mittels des verwendeten Endgeräts 2 und des diesem zugeordneten Medien- und Präsentations-Koordinator (Modul 10) während der Sitzung die Übertragung der Kontrolle (Delegated Control) über die Präsentation beziehungsweis der Übergang der Rolle des Präsentators 7 an den die Präsentation bisher verfolgenden Nutzer 8 initiiert.
IIIb) Die entsprechende Anfrage beziehungsweise Anforderung wird von dem empfängerseitigen Medien- und Präsentations-Koordinator (Modul 10) an den netzseitigen Koordinator (Einrichtung 6) übertragen.
IIIc) Vom netzseitigen Koordinator (Einrichtung 6) wird der (ursprünglich) senderseitige Medien- und Präsentations-Koordinator (Modul 9) über die Übertragung der Kontrolle der Präsentation beziehungsweise über den Übergang der Rolle des Präsentators 7 an den beziehungsweise die der Präsentation bisher folgenden Nutzer 8 informiert.

## Patentansprüche

1. Verfahren zur Durchführung virtueller Präsentationen bei der kollaborativen Zusammenarbeit, nach welchem mediale Inhalte, die von einem Präsentator, nämlich einem Teilnehmer (7) mittels einer, auf während einer Präsentation in einem Netzwerk (3) verbundenen Endgeräten (1, 2) ablaufenden Programmanwendung für die kollaborative Zusammenarbeit präsentiert werden, zur Ausgabe an einem von mindestens einem der Präsentation folgenden Teilnehmer (8) verwendeten Endgerät (2) an die empfängerseitige Leistungsfähigkeit, das heißt insbesondere an die Leistungsfähigkeit des die medialen Inhalte ausgebenden Endgerätes (2) und seiner Verbindung mit dem Netzwerk (3) angepasst werden, **dadurch gekennzeichnet, dass** die medialen Inhalte abbildende Daten der Präsentation vor der Übertragung an ein sie ausgebendes Endgerät (2) aus dem bei der Präsentation übertragenen Datenstrom mit Präsentationsdaten extrahiert, zur Anpassung an die jeweilige empfängerseitige Leistungsfähigkeit skaliert und bei der Präsentation, gesteuert von mindestens einer dafür netzseitig in dem die Endgeräte der Teilnehmer verbindenden Netzwerk (3) angeordneten Einrichtung (6), wieder mit den übrigen Präsentationsdaten zusammengeführt werden, wobei die Skalierung der aus dem Datenstrom mit den Präsentationsdaten extrahierten und indizierten medialen Daten in mindestens einer dafür ausgebildeten oder eingerichteten, ebenfalls netzseitig in dem Netzwerk (3) angeordneten Einrichtung (5) erfolgt und in einer Initialisierungsphase der Präsentation durch empfängerseitig dafür ausgebildete oder eingerichtete Mittel (10) Daten zur empfängerseitigen Leistungsfähigkeit an mindestens eine der in dem Netzwerk (3) angeordneten Einrichtungen (5, 6) übertragen werden.

2. Verfahren nach Anspruch 1, **dadurch gekennzeichnet, dass** die Extraktion der medialen Inhalte aus dem bei der Präsentation übertragenen Datenstrom mit Präsentationsdaten durch dafür ausgebildete oder eingerichtete, senderseitig, das heißt bei dem Präsentator, also dem Teilnehmer (7), angeordnete Mittel (9) erfolgt.

3. Verfahren nach Anspruch 1 oder 2, **dadurch gekennzeichnet, dass** das Zusammenfügen der die skalierten medialen Inhalte abbildenden Daten mit den übrigen Präsentationsdaten durch dafür ausgebildete oder eingerichtete, empfängerseitig angeordnete Mittel (10) erfolgt.

4. Verfahren nach einem der Ansprüche 1 bis 3, **dadurch gekennzeichnet, dass** die medialen Daten während der Präsentation aus den Präsentationsdaten extrahiert und im Zusammenhang mit ihrer Skalierung auf der dafür ausgebildeten oder eingerichteten, in dem Netzwerk angeordneten Einrichtung (5) temporär gespeichert werden oder dass die medialen Daten bereits vor der Durchführung der Präsentation aus den Präsentationsdaten extrahiert und zur Speicherung auf die vorgenannte Einrichtung (5) des Netzwerks (3) übertragen werden.

5. Verfahren nach Anspruch 4, wobei die aus der Gesamtheit der Präsentationsdaten extrahierten medialen Daten vor der Präsentation zur Speicherung an die zur ihrer Skalierung ausgebildete Einrichtung (5) des Netzwerks übertragen werden, **dadurch gekennzeichnet, dass** auch die Skalierung der medialen Daten zumindest teilweise bereits vor der Durchführung der Präsentation erfolgt.

6. Verfahren nach einem der Ansprüche 1 bis 5, **dadurch gekennzeichnet, dass** das Verfahren einen Wechsel zwischen Sender- und Empfängerseite ermöglicht, nach welchem durch ein ursprünglich zum Verfolgen einer Präsentation verwendetes Endgerät (2) mediale Inhalte präsentiert und diese medialen Inhalte durch ein vorher zur Aussendung von Präsentationsdaten verwendetes Endgerät (1) lokal ausgegeben werden.

7. Verfahren nach Anspruch 6, **dadurch gekennzeichnet, dass** der Wechsel zwischen Sender- und Empfängerseite an einem zuvor zur lokalen Ausgabe der medialen Inhalte einer Präsentation verwendeten Endgerät (2) initiiert und durch eine dafür ausgebildete oder eingerichtete, in dem die Endgeräte (1, 2) der Teilnehmer (7, 8) verbindenden Netzwerk (3) angeordnete Einrichtung (6) gesteuert wird.

8. System zur Durchführung einer virtuellen Präsentation bei der kollaborativen Zusammenarbeit mittels dafür ausgebildeter Programmanwendungen, mit mindestens zwei zumindest während der Präsentation über ein Netzwerk (3) miteinander verbundenen Endgeräten (1, 2), von denen mindestens eines zumindest zur Aussendung von Präsentationsdaten und mindestens ein anderes zumindest zum Empfang von Präsentationsdaten sowie zur lokalen Ausgabe eines medialen Inhalts der Präsentation ausgebildet ist, sowie mit mindestens einer mediale Inhalte für die Präsentation bereitstellenden Medienquelle (4) und mit in dem Netzwerk (3) angeordneten Einrichtungen zur Übertragung von einem Endgerät (1) ausgesendeter Präsentationsdaten an mindestens ein diese empfangendes Endgerät (2), **dadurch gekennzeichnet, dass** einem Präsentationsdaten mit medialen Inhalten aussendenden Endgerät (1) ein Modul (9) zur Extraktion der die medialen Inhalte abbildenden Daten aus dem bei der Präsentation übertragenen Datenstrom mit den Präsentationsdaten zugeordnet ist, dass mindestens eine in dem Netzwerk (3) angeordnete Einrichtung (5) zur Skalierung der extrahierten medialen Daten ausgebildet oder eingerichtet ist und dass einem mediale Inhalte der Präsentation lokal ausgebenden Endgerät (2) ein Modul (10) zum Zusammenfügen der skalierten und indizierten medialen Daten mit den übrigen Präsentationsdaten des die entsprechenden medialen Inhalte ursprünglich enthaltenden Datenstroms zugeordnet ist, welches in einer Initialisierungsphase der Präsentation Daten zur empfängerseitigen Leistungsfähigkeit, nämlich insbesondere der Leistungsfähigkeit des den medialen Inhalt ausgebenden Endgerätes (2) und seiner Verbindung mit dem Netzwerk (3), an die Einrichtung (5) zur Skalierung der medialen Inhalte und/oder an eine ebenfalls in dem Netzwerk (3) angeordnete Einrichtung (6) zur Steuerung einer zeitlich synchronisierten Weiterleitung der skalierten medialen Daten und der mit diesen zusammenzufügenden übrigen Präsentationsdaten an das diese zusammenfügende Modul (10) überträgt.

9. System nach Anspruch 8, **dadurch gekennzeichnet, dass** es sich bei dem Modul (9) zur Extraktion der medialen Daten auf der Seite des Präsentationsdaten aussendenden Endgeräts (1) und bei dem Modul (10) zu deren Zusammenführung auf der Seite des mindestens einen Endgeräts (2) zum Empfang und zur Ausgabe von Präsentationsdaten um Programmanwendungen in Form von Plugins für eine browserbasierte Präsentationssoftware handelt.
